# EUROPEAN PATENT APPLICATION

(11) **EP 3 988 379 A1**
(43) Date of publication of application: **27.04.2022**
(21) Application number: 21204278.2
(22) Date of filing: 22.10.2021
(51) Int. Cl.: B60L 53/16

(54) **HIGH-CURRENT CONTACT MEANS AND METHOD FOR OPERATING THE HIGH-CURRENT CONTACT MEANS**

(30) Priority: 22.10.2020 DE 102020127836
(71) Applicant: TE Connectivity Germany GmbH, 64625 Bensheim (DE)
(72) Inventor: MEIER, Ruediger, 69151 Neckargemuend (DE); STABROTH, Waldemar, 55278 Mommenheim (DE); SEIPEL, Volker, 64625 Bensheim (DE)
(74) Representative: Patentanwaltskanzlei WILHELM & BECK

(57) **Abstract**

The invention relates to a high-current contact means (30) and to a method for operating a high-current contact means (30), the high-current contact means (30) comprising a contact element (60) and a cooling device (65) that has a coolant container (70), an absorber container (75), a valve (80) and a fluid line (85), the coolant container (70) being thermally connected to the contact element (60), and the absorber container (75) being arranged at a distance from the coolant container (70) and the contact element (60), the coolant container (70) being at least partially filled with a liquid coolant (155), and the absorber container (75) being at least partially filled with an absorber material (190), the valve (80) being arranged in the fluid line (85), the coolant container (70) being fluidically connected to the absorber container (75) when the valve (80) is in an open position, and the coolant container (70) being fluidically separated from the absorber container (75) when the valve (80) is in a closed position, in the open position the coolant (155) in the coolant container (70) changing to a gaseous phase and cooling the contact element (60), and the fluid line (85) being designed to convey the gaseous coolant (155) from the coolant container (70) to the absorber container (75), the absorber material (190) being designed to absorb the gaseous coolant (155).

## Description

The invention relates to a high-current contact means according to Claim 1, and to a method for operating the high-current contact means according to Claim 8.

There are known charging sockets for electric motor vehicles. The charging sockets each have a contact element that is connected to a thick electric cable in order to transmit the electric current between the charging socket and a control device, or traction battery. The transmitted power causes the contact element to heat up significantly. In order to avoid significant overheating of the contact element, a maximum electric power can only be transmitted via the contact element for a short period of time before the electric power to be transmitted has to be reduced in order to avoid overheating of the contact element.

It is an object of the invention to provide an improved high-current contact means and a method for operating such a high-current contact means.

This object is achieved by means of a high-current contact means according to Claim 1, and by means of a method for operating the high-current contact means according to Claim 8. Advantageous embodiments are specified in the dependent claims.

It was recognised that an improved high-current contact means for a motor vehicle can be provided by the high-current contact means comprising a contact element and a cooling device. The cooling device has a coolant container, an absorber container, a valve and a fluid line. The coolant container is thermally connected to the contact element. The absorber container is arranged at a distance from the coolant container and the contact element. The coolant container is at least partially filled with a liquid coolant, and the absorber container is at least partially filled with an absorber material. The valve is arranged in the fluid line. The fluid line runs between the coolant container and the absorber container. The valve is adjustable between an open position and a closed position. In the open position the coolant container is fluidically connected to the absorber container, and in the closed position the coolant container is fluidically separated from the absorber container. In the open position the coolant is designed to change to a gaseous phase in the coolant container and to cool the contact element. The fluid line is designed to convey the gaseous coolant from the coolant container to the absorber container. The absorber material is designed to absorb the gaseous coolant.

This design has the advantage that the heat required for the phase conversion is extracted from the contact element and thus the contact element is cooled particularly well. Due to the cooling of the contact element, overheating of the contact element can be avoided. In particular, in the case of high-current transmission in a range of from 150 amperes to 700 amperes, in particular in a range of from 200 amperes to 500 amperes, an internal resistance of the contact element and/or a contact resistance between the contact element and a further contact element to which the contact element can be contacted, and/or a further contact resistance between the contact element and an electric conductor, is already sufficient to cause significant heating of the contact element. Due to the cooling of the contact element by means of the cooling device, overheating of the contact element is avoided. In particular, this allows a particularly high electric power, in particular in a range of from 200 kW to 500 kW, to be transmitted via the contact element over a longer period of time without the electric power in this case having to be reduced with increasing duration.

Furthermore, the cooling device is integrated into the high-current contact means, such that further cooling devices for cooling the contact element are not required. The high-current contact means is thus of a particularly simple and cost-effective design.

In another embodiment, there is a heating means arranged in the absorber container, the heating means being designed to heat the absorber material to a predefined temperature in order to remove the absorbed coolant, in particular to vaporize it. This design has the advantage that it is possible to regenerate the absorber material and the coolant, and following heating of the coolant the absorber material is again able to receive gaseous coolant. Consequently, following regeneration of the absorber material, the contact element can be cooled multiple times by the cooling means.

It is particularly advantageous in this case if the heating means has an electric heating coil, the heating coil being at least partially embedded in the absorber material. It can thus be ensured that there is a good transfer of heat between the heating coil and the absorber material, such that the amount of electrical energy required to energize the heating coil for the purpose of regenerating the absorber material is particularly small. Since the electrical energy for heating the electric heating coil in an electric or a hybrid vehicle is taken from the traction battery, an economical heating coil is of particular advantage.

In another embodiment, the fluid line is realized, for example, as a U-shaped line. The fluid line has a first sub-portion that leads into the coolant container, a second sub-portion that leads into the absorber container, and an intermediate portion that fluidically connects the first sub-portion to the second sub-portion. The intermediate portion of the fluid line is arranged on the top side of the coolant container and/or the absorber container. This design ensures that, when the high-current contact means is fitted in the motor vehicle, an unintentional transfer of the liquid coolant from the coolant container into the absorber container is prevented by the intermediate portion arranged on the top side. As a result, the functionality of the cooling device is ensured, and the transfer of liquid coolant into the absorber container is prevented.

In another embodiment, the contact element has a contact portion for electrically contacting a further high-current contact means, and has a fastening portion that is electrically and mechanically connected to the contact portion. At the fastening portion, an electric conductor of an electric lead is connectable to the fastening portion on a first side. On a second side of the fastening portion that faces away from the first side, the coolant container is thermally and preferably mechanically connected to the fastening portion. This design has the advantage that the contact element can be cooled particularly well. Both the contact element and the electric lead have a high thermal capacity and thermal conductivity in order to dissipate heat from the gaseous coolant for condensation of the coolant. It is thereby ensured that, in the regeneration of the cooling device, the contact element and additionally the electric lead serve as a heat sink for cooling and condensation of the gaseous coolant in the coolant container.

In another embodiment, the valve is designed to be electrically controllable and can be electrically connected to a control device. This design has the advantage that the cooling device can be activated and deactivated by switching the valve in dependence on an operating parameter of the contact element.

In another embodiment, the high-current contact means has a housing that at least partially delimits a housing interior on the inside. The coolant container is arranged in the housing interior. The absorber container is arranged on an outer side of the housing. This design ensures that, upon the heating means being activated, the coolant container in which the coolant condenses is not unwantedly heated by the heating means.

In another embodiment, the absorber material has a crystal structure and/or comprises zeolite and/or activated carbon and/or silicate, in particular silicate gel and/or sodium dichromate and/or lithium bromide and/or lithium hydroxide. Additionally or alternatively, the coolant comprises at least water and/or alcohol and/or glycol.

In a method for operating the contact means described above, the valve is moved from the closed position to the open position. The liquid coolant present in the coolant container changes from the liquid phase to the gaseous phase, and the coolant cools the contact element. The gaseous coolant flows via the fluid line into the absorber container. The absorber material absorbs the gaseous coolant. This design has the advantage that, due to the phase conversion between the liquid phase, in which the coolant is present in the coolant container, and the gaseous phase, a particularly large amount of heat can be absorbed from the contact element by the coolant, and thus the contact element can be cooled particularly effectively.

In another embodiment, an operating parameter of the contact element is determined. If a predefined threshold value is exceeded by the determined operating parameter, the valve is moved from the closed position to the open position. The operating parameter may be, for example, a contact-element temperature. The operating parameter may be determined, for example, on the basis of an ambient temperature of the high-current contact means and/or of an electric current transmitted via the contact element. The operating parameter may also be the electric current transmitted via the contact element. This design has the advantage of avoiding unnecessary activation of the cooling device, for example when a low electric current (for example less than 50 amperes) is transmitted via the contact element or the contact element only heats up slightly due to a low outside temperature. This means that the cooling device is still available if, for example, the charging station is changed in order to transmit a high current via the contact element. Furthermore, the service life of the cooling means is extended and an unnecessary load on the traction battery is avoided.

In another embodiment, following switchover of the valve to the open position, the valve is kept in the open position for a predefined first time interval of, for example, 30 minutes to three hours. It is thereby ensured that the coolant present in the coolant container can be completely changed to the gas phase.

In another embodiment, the contact element is cooled down after transmission of current via the contact element has ended. The cooling may be effected passively to the environment if the cooling device no longer has a cooling effect. The heating means is activated after the contact element has cooled below a predefined second threshold value, and the absorber material is heated to a predefined temperature, such that the coolant stored in the absorber material is changed to its gaseous phase. The gaseous coolant flows from the absorber container to the coolant container via the fluid line and condenses in the coolant container. This design has the advantage that safe condensing of the coolant in the coolant container is ensured.

In another embodiment, the heating means heats the absorber material to a temperature of 150 °C to 300 °C, such that the absorbed coolant is vaporized. The regeneration of the absorber material is thus effected particularly rapidly.

In another embodiment, the valve is switched over from the open position to the closed position following deactivation of the heating means. This ensures that the cooling device is deactivated and can be activated if required.

In another embodiment, the valve is moved in a periodically iterative manner from the closed position to the open position in a regular regeneration time interval, and the heating means is activated substantially simultaneously, such that the absorber material is heated to the predefined temperature and the coolant stored in the absorber material is changed to its gaseous phase. The gaseous coolant flows from the absorber container to the coolant container via the fluid line and condenses in the coolant container, the valve being switched over from the open position to the closed position following deactivation of the heating means. The cooling capacity of the cooling device can thus be ensured when necessary, even if there is a slight leakage of the valve.

The invention is explained in greater detail in the following on the basis of figures. There are shown therein:
Figure 1 a schematic representation of a motor vehicle;
Figure 2 a sectional view, along a sectional plane A-A shown in Figure 1, through a high-current contact means of the motor vehicle shown in Figure 1;
Figure 3 a flow diagram of a method for operating the high-current contact means shown in Figures 1 and 2, according to a first embodiment;
Figure 4 a functional diagram of the high-current contact means during a fifth method step;
Figure 5 a functional diagram of the high-current contact means during a seventh method step;
Figure 6 a flow diagram of a method according to a second embodiment for operating the high-current contact means shown in Figures 1 and 2.

In the following figures reference is made to a coordinate system. The coordinate system in this case has an x-axis (longitudinal direction), a y-axis (transverse direction) and a z-axis (vertical direction).

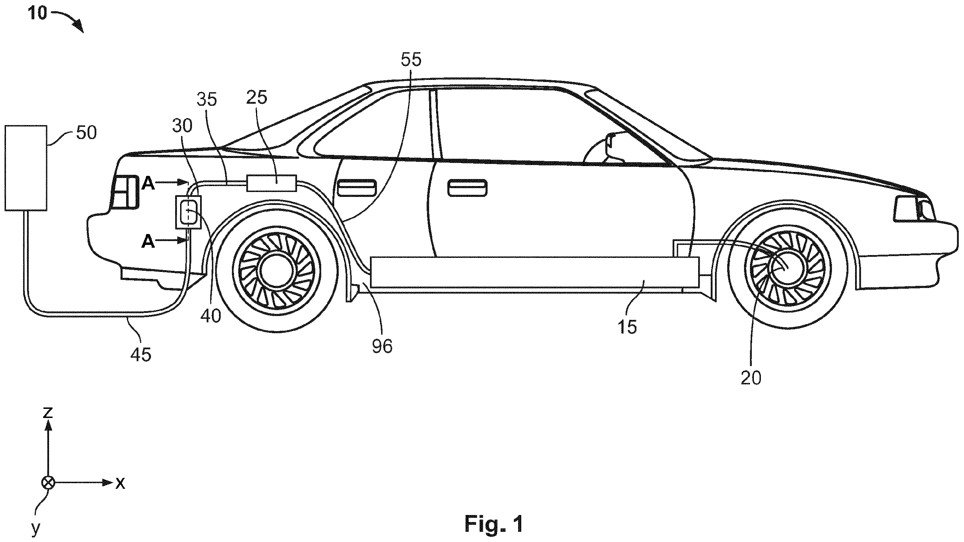

Figure 1 shows a schematic representation of a motor vehicle 10.

In the embodiment, the motor vehicle 10 is exemplarily realized as a hybrid vehicle or as an electric vehicle. The motor vehicle may be a passenger car or a truck, in particular a light-duty truck. The motor vehicle 10 has a traction battery 15, a drive motor 20, a control device 25 and a high-current contact means 30. The traction battery 15 is designed to store electrical energy and has a capacity of, for example, 30 kWh to 100 kWh. The drive motor 20 is designed to drive the motor vehicle 10 when electrical energy is provided from the traction battery 15.

The high-current contact means 30 is designed, for example, as a charging plug or charging socket and is mounted with a predefined orientation in the motor vehicle 10. The high-current contact means 30 is electrically connected to the control device 25 by means of a first electric lead 35. The control device 25 is electrically connected to the traction battery 15 by means of a second electric lead 55. The control device 25 may be realized, for example, as a charging device for charging the traction battery 15.

When the motor vehicle 10 is in a charging state, mounted on the high-current contact means 30 there is a further high-current contact means 40 that is electrically connected to a charging station 50 by means of a charging cable 45. The charging station 50 is realized, for example, as a rapid charging station. The charging station 50 is designed to provide electric power in the range of from at least 50 kW to 500 kW, preferably from at least 150 kW to 500 kW, for charging the traction battery 15 at a voltage of preferably 700 volts to 1200 volts. As a result, a charging current may be approximately 40 amperes to 700 amperes. The electric power is transmitted via the charging cable 45 from the charging station 50 to the further high-current contact means 40. The electric power is transmitted to the high-current contact means 30 when the further high-current contact means 40 has been mounted on the high-current contact means 30. The electric power is charged from the high-current contact means 30 via the first electric lead 35 to the control device 25, and from the control device 25 via the second electric lead 55 to the traction battery 15. This allows particularly rapid charging of the traction battery 15.

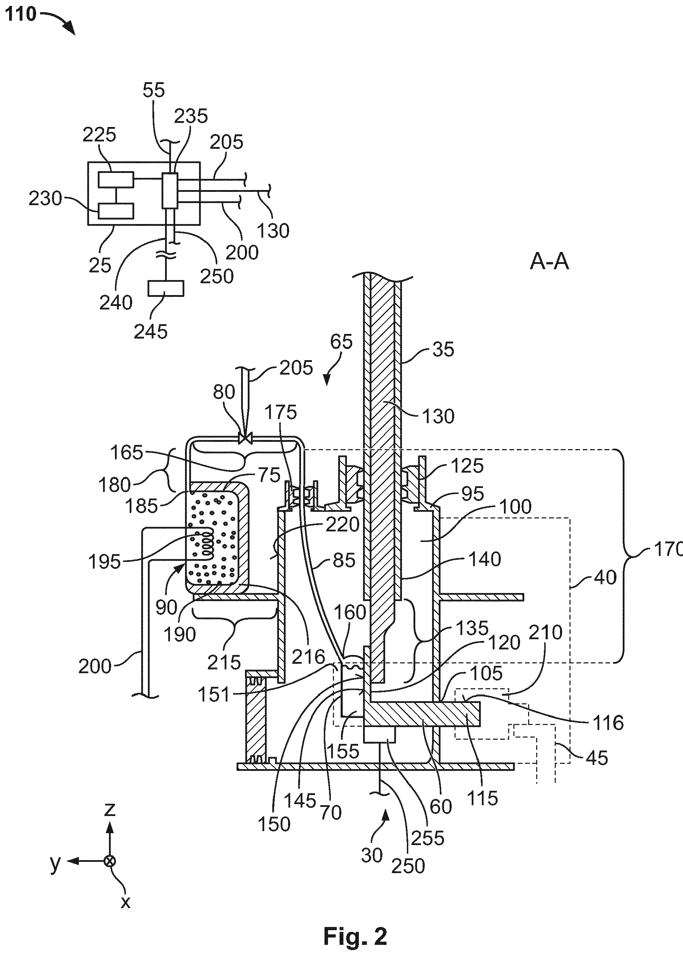

Figure 2 shows a sectional view, along a sectional plane A-A shown in Figure 1, through the high-current contact means 30 shown in Figure 1.

The high-current contact means 30 has a contact element 60, a cooling device 65 for cooling the contact element 60 and a housing 95 for mechanically fastening the contact element 60. Preferably, the high-current contact means 30 has a plurality of contact elements 60, only one contact element 60 being represented, as an example, in Figure 2. The functionality of the high-current contact means 30 shown in Figure 2 is explained with reference to the contact element 60.

The housing 95 may be mechanically connected to a body 96 of the motor vehicle 10. The housing 95 has a housing interior 100 and a first leadthrough 105. The housing interior 100 of the high-current contact means 30 is preferably sealed off from an environment 110. The contact element 60 extends, with a contact portion 115 that in the embodiment is of a pin type, through the first leadthrough 105 of the housing 95 and protrudes, with a first sub-portion of the contact portion 115, from the housing 95. Arranged on the circumference of the contact portion 115, outside the housing 95, there is a contact surface 116 for electrical contacting.

The contact element 60 has a plate-shaped fastening portion 120. The fastening portion 120 is both electrically and mechanically and thermally connected to the contact portion 115, and adjoins the contact portion 115 on a side that faces away from the contact surface 116. Preferably, the contact portion 115 and the fastening portion 120 are made, in one piece and of the same material, from an electrically conductive and thermally conductive material such as, for example, copper and/or aluminium and/or steel.

The further high-current contact means 40 (represented by a dashed line in Figure 2) has a further contact element 210, the further contact element 210 electrically and mechanically contacting the contact surface of the contact portion 115, for example, when the further high-current contact means 40 has been mounted on the high-current contact means 30. The further contact element 210 is electrically connected to the charging station 50 via the charging cable 45.

The fastening portion 120 is arranged in the housing interior 100. Moreover, the first electric lead 35 is routed into the housing interior 100 via a second leadthrough 125 of the housing 95. The first electric lead 35 has an electric conductor 130, the electric conductor 130 preferably having a cross-sectional area of from 50 mm² to 95 mm². The electric conductor 130 may be fine-stranded or ultrafine-stranded. In a stripped portion 135 of the first electric lead 35, an electrically insulating sheath 140 of the first electric lead 35 is removed from the electric conductor 130. The stripped portion 135 is attached, for example welded, to the fastening portion 120, on a first side 145 of the fastening portion 120.

In the embodiment, for example, one cooling device 65 is provided for each contact element 60. The cooling device 65 has a coolant container 70, an absorber container 75, an electrically switchable valve 80, a fluid line 85 and a heating means 90.

The coolant container 70 is thermally coupled to the contact element 60. In the embodiment, the coolant container 70 is thermally and mechanically connected, for example, to the fastening portion 120 on a second side 150 that is opposite the first side 145 in the y-direction. For example, the fastening portion 120 and the coolant container 70 may be connected in a materially bonded manner, for example soldered or welded. The second side 150 may be flat, for example.

The coolant container 70 could also be spaced apart from the contact element 60 and, for example, be thermally connected to the fastening portion 120 via a thermally conductive material 151, for example a thermally conductive compound. In the embodiment shown in Figure 2, the coolant container 70 is for example additionally embedded in the thermally conductive material 151, at least in certain areas, such that the coolant container 70 is thermally connected to the fastening portion 120, and thus to the contact element 60, in a particularly efficient manner.

In the embodiment, the coolant container 70 has a capacity of at least 1.5 cm³, preferably 2 mm³, to 8 cm³. When the high-current contact means 30 is in a first operating state there is a coolant 155 present in the coolant container 70. The coolant 155 may comprise, for example, water. Also, the coolant 155 may comprise another liquid, for example alcohol and/or glycol in addition to or as an alternative to water. The coolant 155 is preferably frost-proof to at least 25 °C, in particular -40 °C.

On a side that faces towards the second leadthrough 125, the fluid line 85 leads at a first end 160 into the coolant container 70. In the embodiment, as an example, the fluid line 85 is of a U-shaped design. The fluid line 85 has an intermediate portion 165 and, for example, a first sub-portion 170 and a second sub-portion 180. The first sub-portion 170 extends substantially in the z-direction, between the first end 160 and the intermediate portion 165, along a first straight line. As shown in Figure 2, the first sub-portion 170 in this case may be oriented obliquely relative to a direction of extent of the electric conductor 130 and/or of the z-axis. The first sub-portion 170 extends through a third leadthrough 175 of the housing 95. The intermediate portion 165 is arranged, offset in the z-direction from the coolant container 70, outside of the housing 95.

The second sub-portion 180 adjoins the intermediate portion 165 on a side that faces away from the first sub-portion 170 (in the y-direction). As an example, the second sub-portion 180 runs parallel to the z-axis, as does the electric conductor 130. The second sub-portion 180 leads, at a second end 185 of the fluid line 85, into the absorber container 75.

The absorber container 75 is at least partially, preferably completely, filled with an absorber material 190. The absorber material 190 may have, for example, a crystal structure, preferably a coolant-absorbing crystal structure and/or comprise zeolite and/or activated carbon and/or silicate, in particular silicate gel and/or sodium dichromate and/or lithium bromide and/or lithium hydroxide. Additionally or alternatively, the coolant 155 comprises at least water and/or alcohol and/or glycol. It is particularly advantageous if the absorber container 75, the coolant container 70 and the fluid line 85 are under vacuum, such that a gas pressure, for example in the fluid line 85 and/or the absorber container 75 and/or the coolant container 70, is between 0.00001 MPa and 0.01 MPa in the first operating state.

The heating means 90 has, for example, at least one electric heating coil 195 and a supply line 200. The supply line 200 electrically connects the heating coil 195 to the control device 25. Preferably, the heating coil 195 is completely embedded in the absorber material 190. Embedding in this case is understood to mean that the heating coil 195 is completely enclosed by the absorber material 190.

The valve 80 is electrically connected to the control device 25 by means of a control line 205. In the embodiment, the valve 80 is arranged, for example, in the intermediate portion 165. A different arrangement of the valve 80 is also possible, for example in the first or second sub-portion 170, 180.

The valve 80 has a closed position and an open position, the valve 80 being movable between the open position and the closed position. In the closed position, the valve 80 fluidically separates the absorber container 75 from the coolant container 70. In the open position, the fluid line 85 fluidically connects the coolant container 70 to the absorber container 75.

In the embodiment, the intermediate portion 165 is for example arranged (in the z-direction) above the first sub-portion 170 and/or the second sub-portion 180. When the high-current contact means 30 has been fitted in the motor vehicle 10, the coolant container 70 is arranged, for example, below the absorber container 75 in the z-direction. The absorber container 75 and the coolant container 70 may also be arranged at the same level. Alternatively, it would also be possible for the coolant container 70 to be arranged above the absorber container 75. Moreover, when the high-current contact means 30 has been fitted to the motor vehicle 10, the intermediate portion 165 is arranged above the coolant container 70 and/or the absorber container 75. For example, the second leadthrough 125 and the third leadthrough 175 are arranged in a common xy-plane and above the contact element 60. The U-shaped design of the fluid line 85 has the advantage that, when the valve 80 is in the open position, an unwanted overflow of the liquid coolant 155 from the coolant container 70 into the absorber container 75 is avoided.

The absorber container 75 is attached to a housing web 215 of an outer housing side 220 of the housing 95 on a side of the housing 95 that faces away from the contact surface 116. A thermal insulating layer 216, which thermally insulates the absorber container 75 from the housing 95, in particular from the coolant container 70, may be provided in this case between the absorber container 75 and the housing 95.

The control device 25 comprises a control means 225, a data storage means 230 having a data connection to the control means 225, and an interface 235 connected to the control means 225.

A value for a first time interval, a value for a second time interval and a first threshold value S1 are stored in the data storage means 230. In addition, there may be a parameter stored in the data storage means 230. The parameter may be, for example, a tabular assignment, a mathematical algorithm, a computer program or a characteristic diagram.

The interface 235 is connected to the control line 205, the supply line 200 and preferably to the electric conductor 130 of the first electric lead 35 and to the second electric lead 55. In addition, the interface 235 may be connected to a temperature sensor 245 of the motor vehicle 10 via a first signal line 240. The temperature sensor 245 may be provided, for example as an outside-temperature sensor in the motor vehicle 10. The first signal line 240, the supply line 200 and/or the control line 205 may be part of a bus system, in particular a CAN bus.

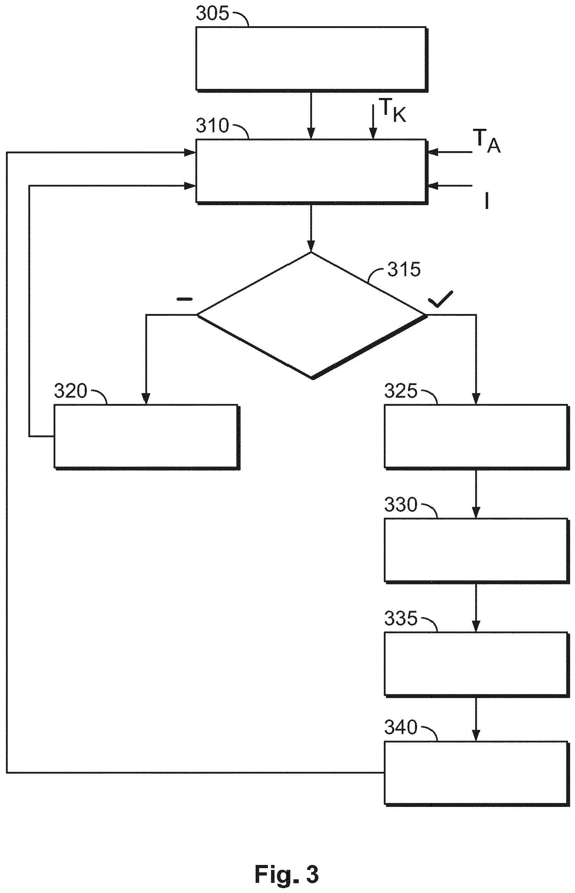

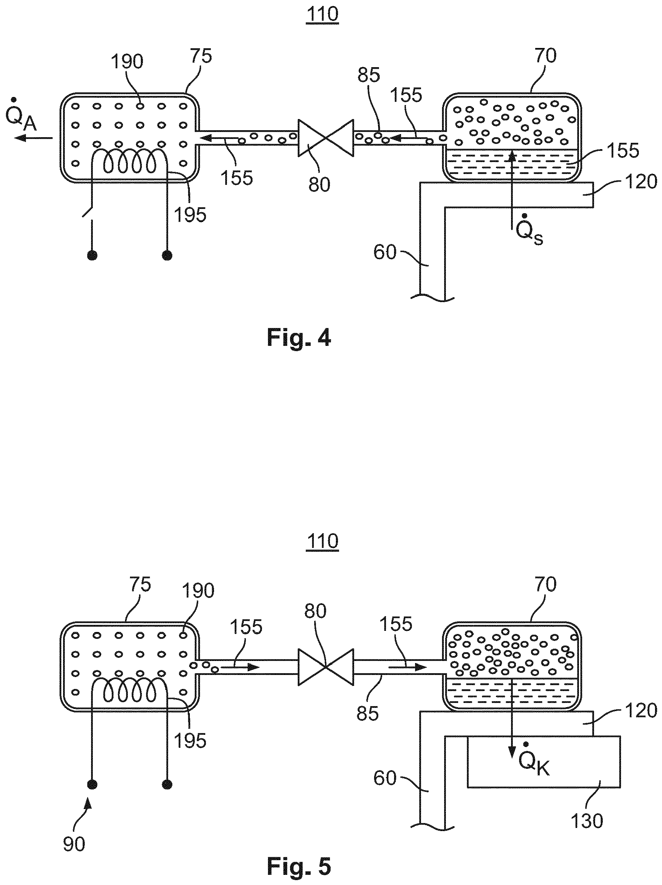

Figure 3 shows a flow diagram of a method for operating the high-current contact means 30 shown in Figures 1 and 2, according to a first embodiment. Figure 4 shows a functional diagram of the high-current contact means 30 during a fifth method step 325, and Figure 5 shows a functional diagram of the high-current contact means 30 during a seventh method step 335.

In a first method step 305, the motor vehicle 10 is disconnected from the charging station 50 and the further high-current contact means 40 is removed from the high-current contact means 30. In the first method step 305, the valve 80 is in the closed position and in the first operating state. It is of particular advantage in this case if the valve 80 is kept de-energized in the closed position.

Further, the coolant container 70 is filled with liquid coolant 155. For example, the coolant container 70 may be filled with, for example, 2 grams of coolant 155. Further, in the first method step 305, the absorber material 190 is present in a dried state in the absorber container 75. The absorber material 190 preferably has an ambient temperature of the high-current contact means 30. Preferably, for 2 grams of coolant 155, 10 grams of absorber material 190 are provided in a dried state in the absorber container 75. Further, in the first method step 305, the heating means 90 is deactivated and is de-energized, for example, by the control means 225.

In a second method step 310, the further high-current contact means 40 is plugged onto the high-current contact means 30 and a charging operation is started. The charging operation is monitored and performed, for example, by the control device 25. The control means 225 in this case may connect the first electric lead 35 to the second electric lead 55.

The control means 225 preferably determines an electric current I, transmitted via the contact element 60, for charging the traction battery 15. During charging, the contact element 60 heats up due to a first ohmic contact resistance between the contact surface 116 and the further contact element 210, a second ohmic contact resistance between the electric conductor 130 and the fastening portion 120, and an internal ohmic resistance of the contact element 60.

During the second method step 310, the first temperature sensor 245 determines, for example, an outside temperature T_{A} of the motor vehicle 10. Via the first signal line 240, the first temperature sensor 245 provides a first temperature signal, corresponding to the outside temperature T_{A}, to the interface 235, which transfers the first temperature signal to the control means 225.

The control means 225 can calculate a contact-element temperature T_{K} of the contact element 60 on the basis of the predefined parameter, the determined outside temperature T_{A} and the determined electric current I flowing through the contact element 60.

In a third method step 315 following the second method step 310, the control means 225 compares the determined contact-element temperature T_{K}, as an operating parameter of the contact element 60, with the predefined first threshold value S1. The first threshold value S1 may be, for example, 50 °C to 70 °C. The control means 225 continues with a fourth method step 320 if the operating parameter, in the exemplary embodiment the contact-element temperature T_{K}, is less than the predefined first threshold value S1. The control means 225 continues with a fifth method step 325 if the contact-element temperature T_{K}, as an operating parameter, is greater than the predefined first threshold value S1.

In the fourth method step 320, the control means 225 continues to hold the valve 80 in the closed position, for example, by means of a closing signal. After the fourth method step 320, the second method step 310 is repeated.

In the fifth method step 325 (see Figure 4), the control means 225 controls the valve 80 by means of an opening signal, which is transmitted to the valve 80 via the interface 235 and the control line 205, for example, in such a way that the valve 80 is moved from the closed position to the open position for the first time interval. In the open position, the valve 80 fluidically connects the coolant container 70 to the absorber container 75.

As a result of the opening of the valve 80, the liquid coolant 155 changes from the liquid phase to a gaseous phase. To effect the phase change, the liquid coolant 155 absorbs a first heat Qs from the contact element 60 and thereby cools the contact element 60 (Figures 4 and 5 show a first heat flow Qs of the first heat Qs from the contact element 60 to the coolant 155). Cooling of the contact element 60 ensures that the heating of the contact element 60 ensures a contact-element temperature T_{K} of below, for example, 90 °C, although the high electric current I of between 40 amperes and 700 amperes, in particular between 200 amperes and 500 amperes, is transmitted via the contact element 60. Moreover, as a result of the cooling of the contact element 60, the stripped portion 135 of the first electric lead 35 is also cooled.

Due to the cooling, there is no need to reduce the electric power for charging the traction battery 15.

The cooling of the contact element 60 thus ensures that the traction battery 15 can be charged particularly quickly by means of the charging station 50 and that a charging operation for charging the traction battery 15 is particularly short. Moreover, the cross-sectional area of the electric conductor 130 can be kept particularly small. Thus, for example, the cross-sectional area can be reduced from the size mentioned above (50 mm² to 95 mm²) to 45 mm² to 75 mm². Furthermore, the cross-sectional area of the electric conductor 130 can be optimized in dependence on a duration of the current transmission via the contact element.

The gaseous coolant 155 flows from the coolant container 70 into the fluid line 85 and via the valve 80 towards the absorber container 75. In the absorber container 75, the absorber material 190 absorbs the gaseous coolant 155. In the process, the absorber material 190 heats up. The heat Q_{A} produced in the absorption of the gaseous coolant 155 is absorbed by the absorber container 75 and emitted into the environment 110 of the high-current contact means 30 (Figure 4 shows a second heat flow *Q̇_{A}* of the second heat Q_{A}). The emitted second heat Q_{A} may in particular be emitted into an interior of the motor vehicle 10. The thermal insulation of the absorber container 75 from the housing 95 by the insulating layer 216 prevents the housing 95 from being damaged by the second heat Q_{A}. Moreover, the absorber container 75 is prevented from heating the coolant container 70 and the coolant 155 contained therein.

In a sixth method step 330, the predefined first time interval, for example 30 to 180 minutes, is waited. Within the first time interval, the traction battery 15 is charged to such an extent that the current I transmitted via the contact element 60 for charging the traction battery 15 is reduced, thereby reducing the heating of the contact element 60. Preferably, within 30 minutes after opening of the valve 80, the charging operation of the traction battery 15 is completed to such an extent that a driver of the motor vehicle 10 may prematurely terminate the charging operation. Alternatively, the charging operation may be progressed to such an extent that the traction battery 15 is substantially fully charged. Within the first time interval and during charging, the cooling device 65 cools the contact element 60. The cooling process for cooling the contact element 60 ends when the coolant 155 has been completely changed from the liquid phase to the gas phase.

In addition, the first time interval is such that there is sufficient time for the contact element 60 and the electric conductor 130 to cool down, following charging, substantially to the ambient temperature of the high-current contact means 30.

In a seventh method step 335 following the sixth method step 330 (i.e. following the waiting of the first time interval), the control means 225 activates the heating means 90 via the interface 235 (see Figure 5). Upon activation of the heating means 90, the electric heating coil 195 is supplied with electrical energy from the traction battery 15. The heating coil 195 heats the absorber material 190 preferably to a temperature of between 150 °C and 300 °C. This causes the coolant 155 absorbed in the absorber material 190 to be vaporized and the absorber material 190 to be dried. The insulating layer 216 protects the housing 95 from thermal damage.

The vaporised hot coolant 155 flows via the fluid line 85 and the open valve 80 into the coolant container 70. Due to the fact that it is thermally coupled to the contact element 60 and via the contact element 60 to the electric conductor 130, the coolant container 70 acts as a heat sink with respect to the coolant container 70. The gaseous coolant 155 condenses in the coolant container 70 and, following condensation, is present there again as liquid coolant 155. The heat dissipation *Q̇_{K}* from the coolant 155 that is necessary for condensation is dissipated via the contact element 60 and the electric conductor 130 and emitted to the environment 110. The electric conductor 130 has a particularly high heat capacity, owing to its large cross-section.

Following the elapse of a second time interval, in which the heating means 90 is activated by the control means 225, for example 15 minutes to 30 minutes, the control means 225 deactivates the heating means 90 and controls the valve 80 by means of a closing signal in such a way that, in the eighth method step 340, the valve 80 is moved from the open position to the closed position.

After the eighth method step 340, the method is continued with the second method step 310.

The seventh and the eighth method step 335, 340 may be repeated at regular regeneration time intervals following the opening of the valve 80, in order to regenerate the absorber material 195 if there is a slight leakage of the valve 80. The regeneration time interval may be, for example, 24 h to 1 week. This ensures an optimal cooling capacity of the cooling means 65 if necessary.

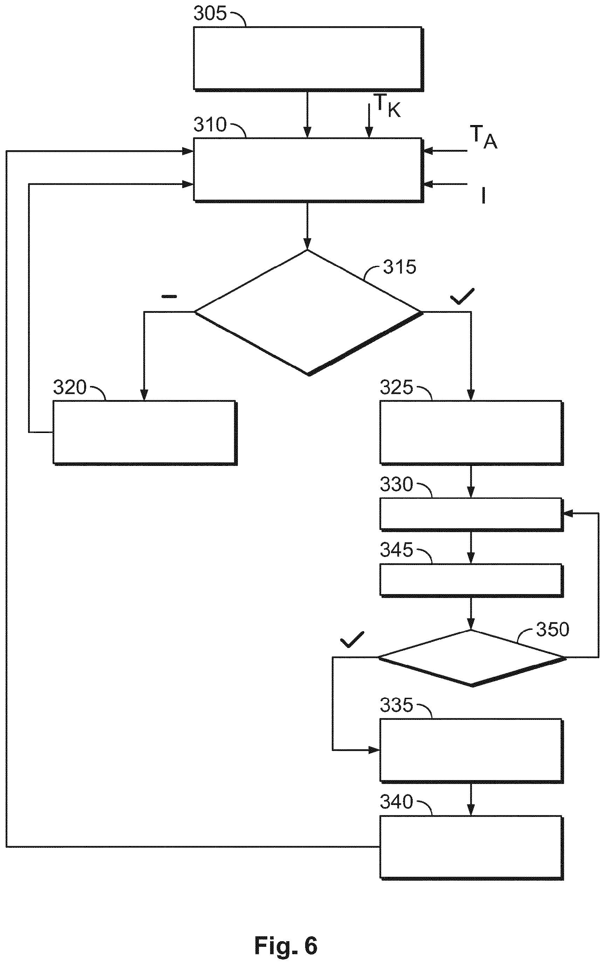

Figure 6 shows a flow diagram of a method according to a second embodiment, for operating the high-current contact means 30 shown in Figures 1 and 2 according to a second embodiment.

The method is substantially identical to the method explained in Figure 3. In the following, only the differences between the method described in Figure 6 and the method described in Figure 3 will be discussed.

In addition, a ninth method step 345 and a tenth method step 350 following the ninth method step 345 are performed between the sixth method step 330 and the seventh method step 335.

The ninth method step 345 follows the sixth method step 330 and is substantially identical to the second method step 310. In the ninth method step 345, the operating parameter is determined again, such that the operating parameter is updated relative to the second method step 310. In this case, as in the second method step 310, the outside temperature T_{A} and the electric current I transmitted via the contact element 60 are determined again, and the contact-element temperature T_{K} is determined again on the basis of the outside temperature T_{A}, the transmitted electric current I and the parameter, for example as an operating parameter.

In a tenth method step 350 following the ninth method step 345, the updated operating parameter, for example the updated contact-element temperature T_{K} determined in the ninth method step 345, is compared with a predefined second threshold value S2 stored in the data storage means 230.

If the determined contact-element temperature T_{K} is below the second threshold value S2, the process continues with the seventh method step 335. If the determined contact-element temperature T_{K} exceeds the second threshold value S2, the process continues with the sixth method step 330, and the first time interval is waited again. Advantageously, in the embodiment the first time interval is shortened compared to Figure 3. Thus, the first time interval may be 15 minutes to 30 minutes. When the first time interval is waited again, the charging operation for charging the traction battery 15 may be completed, and/or there is sufficient time for the contact element 60 and the electric conductor 130 to cool down to the ambient temperature.

The second threshold value S2 is preferably lower than the first threshold value S1. In the embodiment, the second threshold value S2 may be, for example, 30 °C to 50 °C.

As an alternative to the determination of the operating parameter of the contact element 60 described above, for example the current I transmitted via the contact element 60 may also be used as an operating parameter instead of the contact-element temperature T_{K}. For example, the first threshold value S1 has a value of 50 amperes to 200 amperes. The second threshold value S2 is selected to be smaller than the first threshold value S1 and may be, for example, 30 amperes to 100 amperes.

The design of the high-current contact means 30 described above has the advantage that there is no need for further cooling devices 65. The cooling device 65 is integrated into the high-current contact means 30, such that, in particular, there is no need for large heat sinks for passive cooling, fans for active cooling or similar. In addition, owing to the cooling of the contact element 60 and of the electric conductor 130 connected to the contact element 60, the cross-section of the electric conductor 130 can be kept particularly small. This results in a large saving in weight for connection of the electric conductor 130 to the control device 25 and the traction battery 15. Moreover, due to the smaller cross-section, the first electric lead 35 can be laid in particularly tight radii, such that the installation space required for realizing the high-current vehicle electrical system is reduced.

If the high-current contact means 30 has a plurality of contact elements 60, the cooling device 65 may be provided for each of the contact elements 60. Alternatively, an absorber container 75 may be fluidically connected, for example via a plurality of fluid lines 85, to a plurality of coolant containers 70, each of which is arranged on a contact element 60. This design has the advantage that each of the contact elements 60 of the high-current contact means 30 is cooled.

Furthermore, the integrated cooling device 65 also allows the installation space requirement and the mass of the high-current contact means 30 to be reduced. Moreover, a mass of the high-current contact means 30 can be reduced.

### References

- 10: motor vehicle
- 15: traction battery
- 20: drive motor
- 25: control device
- 30: high-current contact means
- 35: first electric lead
- 40: further high-current contact means
- 45: charging cable
- 50: charging station
- 55: second electric lead
- 60: contact element
- 65: cooling device
- 70: coolant container
- 75: absorber container
- 80: valve
- 85: fluid line
- 90: heating means
- 95: housing
- 96: body
- 100: housing interior
- 105: first leadthrough
- 110: environment
- 115: contact portion
- 116: contact surface
- 120: fastening portion
- 125: second leadthrough
- 130: electric conductor
- 135: stripped portion
- 140: sheath
- 145: first side
- 150: second side
- 151: thermally conductive material
- 155: coolant
- 160: first end
- 165: intermediate portion
- 170: first sub-portion
- 175: third leadthrough
- 180: second sub-portion
- 185: second end
- 190: absorber material
- 195: heating coil
- 200: supply line
- 205: control line
- 210: further contact element
- 215: housing web
- 216: insulating layer
- 220: housing outer side
- 225: control means
- 230: data storage means
- 235: interface
- 240: first signal line
- 245: first temperature sensor
- 250: second signal line
- 255: second temperature sensor
- 305: first method step
- 310: second method step
- 315: third method step
- 320: fourth method step
- 325: fifth method step
- 330: sixth method step
- 335: seventh method step
- 340: eighth method step
- 345: ninth method step
- 350: tenth method step
- Q_{S}: first heat
- Q_{A}: second heat
- Q_{K}: heat
- T_{K}: contact-element temperature
- T_{A}: outside temperature
- I: transmitted electrical current/charging current

## Claims

1. High-current contact means (30), in particular charging plug for a motor vehicle (10),
- comprising a contact element (60) and a cooling device (65) that has a coolant container (70), an absorber container (75), a valve (80) and a fluid line (85),
- the coolant container (70) being thermally connected to the contact element (60), and the absorber container (75) being arranged at a distance from the coolant container (70) and the contact element (60),
- the coolant container (70) being at least partially filled with a liquid coolant (155), and the absorber container (75) being at least partially filled with an absorber material (190),
- the valve (80) being arranged in the fluid line (85), and the fluid line (85) running between the coolant container (70) and the absorber container (75),
- the valve (80) being adjustable between an open position and a closed position,
- in the open position the coolant container (70) being fluidically connected to the absorber container (75), and in the closed position the coolant container (70) being fluidically separated from the absorber container (75),
- in the open position the coolant (155) being designed to change to a gaseous phase in the coolant container (70) and to cool the contact element (60), and the fluid line (85) being designed to convey the gaseous coolant (155) from the coolant container (70) to the absorber container (75),
- the absorber material (190) being designed to absorb the gaseous coolant (155).

2. High-current contact means (30) according to Claim 1,
- there being a heating means (90) arranged in the absorber container (75),
- the heating means (90) being designed to heat the absorber material (190) to a predefined temperature in order to remove the absorbed coolant (155) from the absorber material (190).

3. High-current contact means (30) according to Claim 2,
- the heating means (90) having at least one electric heating coil (195),
- the heating coil (195) being at least partially embedded in the absorber material (190).

4. High-current contact means (30) according to any one of the preceding claims,
- the fluid line (85) having a first sub-portion (170) that leads into the coolant container (70), a second sub-portion (175) that leads into the absorber container (75), and an intermediate portion (165) that fluidically connects the first sub-portion (170) to the second sub-portion (175),
- the intermediate portion (165) of the fluid line (85) being arranged on the top side of the coolant container (70) and/or the absorber container (75).

5. High-current contact means (30) according to any one of the preceding claims,
- the contact element (60) having a contact portion (115) for electrically contacting a further high-current contact means (40), and having a fastening portion (120) that is electrically and mechanically connected to the contact portion (115),
- at the fastening portion (120), an electric conductor (135) of a first electric lead (35) being connectable to the fastening portion (120) on a first side (145),
- on a second side (150) of the fastening portion (120) that faces away from the first side (145), the coolant container (70) being thermally and preferably mechanically connected to the fastening portion (120).

6. High-current contact means (30) according to any one of the preceding claims,
- having a housing (95) that at least partially delimits a housing interior (100) on the inside,
- the coolant container (70) being arranged in the housing interior (120),
- the absorber container (75) being arranged on an outer side (220) of the housing (95).

7. High-current contact means (30) according to any one of the preceding claims,
- the absorber material (190) having a crystal structure and/or comprising zeolite and/or activated carbon and/or silicate, in particular silicate gel and/or sodium dichromate and/or lithium bromide and/or lithium hydroxide,
- and/or
- the coolant (155) comprising at least water and/or alcohol and/or glycol.

8. Method for operating a high-current contact means (30) according to any one of the preceding claims,
- the valve (80) being moved from the closed position to the open position,
- the liquid coolant (155) present in the coolant container (70) changing to the gaseous phase, and the coolant (155) cooling the contact element (60),
- the gaseous coolant (155) flowing via the fluid line (85) into the absorber container (75),
- the absorber material (190) absorbing the gaseous coolant (155).

9. Method according to Claim 8,
- an operating parameter of the contact element (60) being determined,
- if a predefined threshold value is exceeded by the determined operating parameter, the valve (80) being moved from the closed position to the open position,
- the operating parameter being determined on the basis of an ambient temperature of the high-current contact means (30) and/or of an electric current (I) transmitted via the contact element (60).

10. Method according to Claim 8 or 9,
- following switchover of the valve (80) to the open position, the valve (80) remaining in the open position for a predefined first time interval of preferably 30 minutes to three hours.

11. Method according to any one of Claims 8 to 10 and Claim 2,
- the contact element (60) cooling down after transmission of current via the contact element (60) has ended,
- the heating means (90) being activated after the contact element (60) has cooled below a predefined second threshold value, and the absorber material (190) being heated to the predefined temperature, such that the coolant (155) stored in the absorber material (190) is changed to its gaseous phase,
- the gaseous coolant (155) flowing from the absorber container (75) to the coolant container (70) via the fluid line (85) and condensing in the coolant container (70).

12. Method according to Claim 11,
- the heating means (90) heating the absorber material (190) to a temperature of 150 °C to 300 °C, such that the absorbed coolant (155) is vaporized.

13. Method according to Claim 11 or 12,
- the valve (80) being switched over from the open position to the closed position following deactivation of the heating means (90).

14. Method according to any one of Claims 8 to 13,
- the valve (80) being moved in a periodically iterative manner from the closed position to the open position in a regular regeneration time interval, and the heating means (90) being activated substantially simultaneously, such that the absorber material (190) is heated to the predefined temperature and the coolant (155) stored in the absorber material (190) is changed to its gaseous phase,
- the gaseous coolant (155) flowing from the absorber container (75) to the coolant container (70) via the fluid line (85) and condensing in the coolant container (70),
- the valve (80) being switched over from the open position to the closed position following deactivation of the heating means (90).
